(19) Europäisches Patentamt
European Patent Office
Office européen des brevets

(11) EP 3 748 592 B1

(12) **EUROPÄISCHE PATENTSCHRIFT**

(45) Veröffentlichungstag und Bekanntmachung des Hinweises auf die Patenterteilung:
**03.04.2024 Patentblatt 2024/14**

(21) Anmeldenummer: **20178374.3**

(22) Anmeldetag: **04.06.2020**

(51) Internationale Patentklassifikation (IPC):
*G07F 17/12* (2006.01)   *G06K 7/10* (2006.01)
*B65G 1/137* (2006.01)   *G06K 17/00* (2006.01)
*G06Q 10/087* (2023.01)

(52) Gemeinsame Patentklassifikation (CPC):
**G07F 17/12; G06K 7/10128; G06K 17/0022;**
**G06Q 10/087;** B65G 1/1371

(54) **WARENSPEICHER**

GOODS STORAGE

DISPOSITIF DE RÉSERVE DE MARCHANDISE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.06.2019 DE 202019103228 U**

(43) Veröffentlichungstag der Anmeldung:
**09.12.2020 Patentblatt 2020/50**

(73) Patentinhaber: **KEMAS Gesellschaft für Elektronik,**
**Elektromechanik, Mechanik und Systeme mbH**
**09353 Oberlungwitz (DE)**

(72) Erfinder:
- **Walosczyk, Ulrich**
  **09577 Niederwiesa (DE)**
- **Grämer, Björn**
  **09337 Hohenstein-Ernstthal (DE)**
- **Jürgen, Rabe**
  **09116 Chemnitz (DE)**

(74) Vertreter: **Wenzel Nemetzade Warthmüller**
**Patentanwälte Part mbB**
**Maximilianstraße 2**
**80539 München (DE)**

(56) Entgegenhaltungen:
**EP-A1- 2 908 276        EP-A2- 1 399 870**
**EP-A2- 2 188 791        EP-B1- 2 188 791**
**AU-A1- 2017 220 064     JP-B2- 4 342 279**
**US-A1- 2008 121 700     US-A1- 2009 085 746**
**US-A1- 2009 160 605     US-A1- 2009 268 989**
**US-B1- 6 456 239**

- **AHMAD RAHMATI ET AL: "Reliability Techniques for RFID-Based Object Tracking Applications", DEPENDABLE SYSTEMS AND NETWORKS, 2007. DSN '07. 37TH ANNUAL IEEE/IFIP INTERNATIONAL CONFERENCE ON, IEEE, PI, 1 June 2007 (2007-06-01), pages 113-118, XP031116413, ISBN: 978-0-7695-2855-7**

**Beschreibung**

Die vorliegende Erfindung betrifft einen Warenspeicher für mit Transponder versehene und als Textilien ausgebildete Waren. Ebenso ist ein Verfahren zur Positionsbestimmung von als Textilien ausgebildete Waren in einem solchen Warenspeicher offenbart.

Es ist bekannt, Waren in einem Warenspeicher, beispielsweise in einem Warenausgabeschrank oder dergleichen, anzuordnen und dadurch für Nutzer zugänglich zu machen. Insbesondere können Waren in einem Warenspeicher gelagert oder zwischengelagert werden, sodass Nutzer die fraglichen Waren bei Bedarf aus einem solchen Warenspeicher entnehmen und anschließend bestimmungsgemäß verwenden können.

Grundsätzlich besteht die Möglichkeit, in einem Warenspeicher Waren unterschiedlicher Art beziehungsweise unterschiedlichen Typs anzuordnen, wodurch eine besonders platzsparende Lagerung beziehungsweise Zwischenlagerung realisiert werden kann. Rein beispielhaft können in einem solchen Warenspeicher unterschiedliche Arten von Textilien deponiert werden, insbesondere Poolbekleidung, Ober- und Unterbekleidung, Textilien in unterschiedlicher Größen beziehungsweise Textilien für den Oberkörper und für den Unterkörper, Flachwäsche und/oder Verschiedene Arten von Verbrauchsmaterialien. Sofern eine Vielzahl unterschiedlicher Warentypen und/oder Warenarten in einem Warenspeicher angeordnet wird, kann das Auffinden der jeweiligen Ware mit einem verhältnismäßig hohen Aufwand verbunden sein. So können Warenspeicher einen verhältnismäßig großen Lagerraum aufweisen, indem ein unmittelbares Auffinden der jeweils gewünschten Ware mit relativ viel Zeitaufwand verbunden ist. Zudem kann ein händisches Durchsuchen des Lagerraums eines solchen Warenspeichers die Ordnung der darin angeordneten Waren beeinträchtigen. Für nachfolgende Nutzer kann hierdurch das Auffinden von Waren zusätzlich erschwert werden.

Warenspeicher für mit Transponder versehene Waren sind beispielsweise aus dem Stand der Technik in den Druckschriften US 2009/085746 A1 und AU 2017 220 064 A1 bekannt.

Vor diesem Hintergrund hat der vorliegenden Erfindung die Aufgabe zugrunde gelegen, einen Warenspeicher anzugeben, der eine zielgerichtete und vereinfachte Entnahme einzelner Waren ermöglicht, insbesondere mit einem verringerten Benutzeraufwand zum Auffinden der jeweils gewünschten Ware. Diese Aufgabe ist durch einen Warenspeicher gemäß Anspruch 1 gelöst worden. Ein Verfahren zur Positionsbestimmung von als Textilien ausgebildete Waren ist in Anspruch 9 angegeben. Vorteilhafte Ausgestaltungen sind Gegenstand der abhängigen Ansprüche und werden nachfolgend erörtert.

Ein erfindungsgemäßer Warenspeicher für mit Transponder versehene und als Textilien ausgebildete Waren, weist einen Lagerraum zur Aufnahme und/oder Entnahme von Waren und eine Leseanordnung zur berührungslosen Identifikation von Transpondern auf. Erfindungsgemäß ist die Leseanordnung zur Positionsbestimmung und/oder -eingrenzung von den Transpondern innerhalb des Lagerraums durch Laufzeitbestimmung eingerichtet.

Bei dem Lagerraum des erfindungsgemäßen Warenspeichers kann es sich insbesondere um einen fest definierten Raumabschnitt handeln, indem Waren zur Lagerung beziehungsweise Zwischenlagerung aufgenommen werden können. Aus diesem Lagerraum können die jeweils angeordneten Waren durch einen Nutzer wieder entnommen werden.

Durch die erfindungsgemäß vorgesehene Leseanordnung kann nunmehr mit verhältnismäßig geringem Aufwand eine Positionsbestimmung und/oder Lokalisierung von Transpondern innerhalb des Lagerraums vorgenommen werden. Die Positionsbestimmung beziehungsweise -eingrenzung und/oder Lokalisierung von Transpondern durch Laufzeitbestimmung kann verhältnismäßig schnell und präzise erfolgen. Durch die Positionsbestimmung, beziehungsweise -eingrenzung oder Lokalisierung von Transpondern innerhalb des Lagerraums kann in der Folge Rückschluss über die Position einer Ware, an oder in der der jeweilige Transponder angeordnet ist, gezogen oder die Position kann zumindest eingrenzt werden. Ebenso kann eine lagerfachbezogene Lokalisation realisiert werden. Dabei kann vorausgesetzt werden, dass ein jeweils erfasster Transponder an einer bestimmten Ware fest angeordnet ist, so dass die erfasste Position eines Transponders im Wesentlichen der Position der jeweiligen Ware entspricht.

Durch einen erfindungsgemäßen Warenspeicher kann somit ein Nutzer mit verringertem Aufwand die jeweils gewünschte Ware aus dem Lagerraum entnehmen. Insbesondere besteht die Möglichkeit, aufgrund der Positionsbestimmung und/oder Ortsbestimmung von Transpondern innerhalb des Lagerraums den manuellen Entnahmevorgang aus dem Lagerraum zu beeinflussen, beispielsweise nur in einem lokal beschränkten Abschnitt des Lagerraums nach der jeweils gewünschten Ware zu suchen, in der diese aufgrund der Positionsbestimmung und/oder Ortsbestimmung des jeweiligen Transponders befindlich ist. Hierdurch wird der Zeitaufwand zum Auffinden einer gewünschten Ware deutlich reduziert und die Gefahr eines übermäßigen und Unordnung verursachenden Durchsuchens des Lagerraums kann verringert werden.

Gemäß einer bevorzugten Ausgestaltung der vorliegenden Erfindung kann die Leseanordnung zur Positionsbestimmung und/oder -eingrenzung und/oder Lokalisation von Transpondern innerhalb des Lagerraums ausschließlich durch Laufzeitbestimmung eingerichtet sein. Auf diese Weise kann der Einsatz zusätzlicher beziehungsweise redundanter Erfassungssysteme vermieden werden. Es kann dadurch ein besonders kostensparender Aufbau realisiert werden.

Gemäß einer weiter bevorzugten Ausgestaltung kann die Leseanordnung zur Laufzeitbestimmung auf Grundlage der jeweils kürzesten Signallaufzeit und/oder den jeweils kürzesten Signallaufzeiten eingerichtet sein, insbesondere zwischen der Leseanordnung und einem Transponder und/oder einem Referenztransponder. Besonders bevorzugt kann die Leseanordnung zur Laufzeitbestimmung auf Grundlage der jeweils kürzesten Signallaufzeit und/oder den jeweils kürzesten Signallaufzeiten im ungestörten elektromagnetischen Feld, insbesondere frei von Reflexionen, eingerichtet sein. Auf diese Weise kann eine besonders hohe Betriebssicherheit beziehungsweise Zuverlässigkeit der Positions- beziehungsweise Ortsbestimmung gewährleistet werden.

Signallaufzeiten ergeben sich aus der Entfernung von der Leseanordnung zu dem jeweiligen Transponder beziehungsweise Referenztransponder. Eine Signallaufzeit kann sich hierbei als Produkt der Ausbreitungsgeschwindigkeit des jeweiligen Signals im Raum, insbesondere Lichtgeschwindigkeit, sowie dem jeweiligen Abstand ergeben. Ein etwaiger Abstand kann somit aus dem der Ausbreitungsgeschwindigkeit eines Signals im Raum, insbesondere Lichtgeschwindigkeit, und einer Signallaufzeit ermitteln.

Erfindungsgemäß ist der Lagerraum durch eine Ordnungsstruktur unterteilt in eine Mehrzahl Lagerfächern. Die Ordnungsstruktur kann eine Mehrzahl von Ordnungselementen und/oder Trennmitteln aufweisen. Ein Ordnungselement kann insbesondere als Trennmittel ausgebildet sein. Durch eine derartige Ordnungsstruktur lassen sich Waren in besonders vorteilhafter Weise nach einem vordefinierten Schema innerhalb des Lagerraums anordnen. Insbesondere gestattet eine solche Ordnungsstruktur die Gruppierung von Waren beziehungsweise die Anordnung von Warengruppen auf definierten Lagerplätzen beziehungsweise innerhalb von definierten Lagerfächern. Das Auffinden und Entnehmen von Waren aus einem solchen Warenspeicher kann somit weiter vereinfacht werden. In besonders vorteilhafter Weise kann der Lagerraum durch eine Ordnungsstruktur für unterschiedliche Warentypen oder Artikel unterteilt sein.

In weiter bevorzugter Weise kann zumindest eines der Lagerfächer mit einem Verhältnis der Fachbreite zu Fachhöhe und/oder mit einem Verhältnis der Fachtiefe zu Fachhöhe von < 2, insbesondere von < 1,5, bevorzugt von < 1, weiter bevorzugt von < 0,75, weiter bevorzugt von < 0,5, ausgebildet sein. Durch derartige Größenverhältnisse kann die Positionsbestimmung beziehungsweise -eingrenzung mit weiter erhöhter Sicherheit erfolgen. Ungenauigkeiten aufgrund seitlich versetzter Position der Transponder relativ zur Leseanordnung wirken sich bei derartigen Größenverhältnissen nur in geringer Weise aus, sodass die Betriebssicherheit und/oder Betriebsgenauigkeit insgesamt verbessert werden kann.

Erfindungsgemäß weist die Ordnungsstruktur des Lagerraums eine Mehrzahl von Fachböden auf. Eine derartige Ordnungsstruktur lässt sich mit nur geringem Fertigungsaufwand herstellen und gewährleistet gleichzeitig ein hohes Maß an Funktionalität, insbesondere zur Unterteilung des Lagerraums in unterschiedliche Lagerzonen beziehungsweise Raumabschnitte.

Gemäß einer weiter bevorzugten Ausgestaltung kann eine Ordnungsstruktur des Lagerraums variabel und/oder werkzeugfrei anpassbar sein, insbesondere durch Höhenverstellung und/oder Neupositionierung einzelner Ordnungselemente und/oder Trennmittel innerhalb des Lagerraums. So besteht beispielsweise die Möglichkeit, einen Fachboden der Ordnungsstruktur händisch in seiner Höhenlage zu verstellen, beispielsweise durch Herausnehmen des Fachbodens und Neupositionierung auf einer anderen Höhenposition. Hierzu können an dem Warenspeicher unterschiedliche Aufnahmeschienen beziehungsweise Aufnahmevorsprünge, Aufnahmepins oder dergleichen vorgesehen sein. Durch eine variable beziehungsweise werkzeugfreie Anpassbarkeit der Ordnungsstruktur kann diese flexibel an die jeweiligen Einsatzbedingungen angepasst werden. Die Einsatzflexibilität des Warenspeichers wird hierdurch verbessert.

Weiter bevorzugt kann die Ordnungsstruktur unter Einhaltung vordefinierter Verhältnisse von Fachbreite zu Fachhöhe und/oder Fachtiefe zu Fachhöhe anpassbar sein. Insbesondere kann in vorteilhafter Weise die Ordnungsstruktur nur unter Einhaltung vordefinierter Verhältnisse von Fachbreite zu Fachhöhe und/oder Fachtiefe zu Fachhöhe anpassbar sein. Die Anpassbarkeit kann beispielsweise in festgelegten Grenzen gegeben sein. Bei den vordefinierten Verhältnisse von Fachbreite zu Fachhöhe und/oder Fachtiefe zu Fachhöhe kann es sich um die voranstehend beschriebenen Größenverhältnisse handeln. Trotz Variabilität der Ordnungsstruktur kann auf diese Weise eine hohe Betriebssicherheit und/oder Betriebsgenauigkeit gewährleistet werden.

In erfindungsgemäßer Weise ist der Lagerraum durch ein Gehäuse und von Wandabschnitten umgeben. Der Lagerraum kann hierdurch in geeigneter Weise begrenzt werden, so dass auch der Erfassungsbereich der Leseanordnung in geeigneter Weise definiert werden kann. In weiter erfindungsgemäßer Weise ist der Lagerraum verschließbar durch eine Schließvorrichtung. Bevorzugt kann die Schließvorrichtung durch eine Tür und/oder ein Tor und/oder ein Rollgitter ausgebildet sein. Durch eine derart verschließbare Ausgestaltung des Lagerraums kann der Zugriff von unbefugten Personen vermieden beziehungsweise ein etwaiges Risiko verringert werden. Eine Freigabe der Schließvorrichtung kann beispielsweise erst nach erfolgter Identifikation und/oder Autorisierung des jeweiligen Nutzers erfolgen. Die Gefahr unbefugter Warenentnahmen wird auf diese Weise verringert.

In weiter bevorzugter Weise können Gehäuse- und/oder Wandabschnitte und/oder die Schließvorrichtung dazu ausgebildet sein, dass der Lagerraum uneinsehbar ist, insbesondere bei geschlossener Schließvorrichtung. Ebenso ist es möglich, dass der Lagerraum auch bei geschlossener Schließvorrichtung von außen einsehbar ist. Hierzu kann das Gehäuse, die Wandabschnitte und/oder die Schließvorrichtung entsprechend durchsehbar ausgestaltet sein, beispielsweise durch eine Gitterstruktur gebildet sein.

Erfindungsgemäß weist die Leseanordnung eine Leseeinheit zur berührungslosen Identifikation von Transpondern auf, bevorzugt zur Identifikation von RFID-Transpondern. In besonders vorteilhafter Weise kann die Leseeinheit zur berührungslosen Identifikation von und/oder Kommunikation mit aktiven und/oder passiven RFID-Transpondern und/oder UHF-RFID-Transpondern und/oder SHF-RFID-Transpondern ausgebildet sein. Weiter bevorzugt kann die Leseanordnung ausschließlich zur Identifikation und/oder Positions- und/oder Ortsbestimmung von RFID Transpondern ausgebildet und/oder frei von optischen und sonstigen Erfassungsvorrichtungen, wie zum Beispiel Bluetooth oder WLAN-Vorrichtungen, sein.

Eine berührungslose Identifikation von Transpondern kann mit nur geringem Aufwand, insbesondere in einer verhältnismäßig kurzen Lesezeit, bewerkstelligt werden. Zudem gestattet die RFID-Technologie den Einsatz von Transpondern geringer Baugröße und gleichzeitig geringer Fehleranfälligkeit. Insbesondere im Fall von passiven RFID-Transpondern können besonders geringe Baugrößen realisiert werden. Passive RFID-Transponder sind darüber hinaus besonders wartungsarm, da diese keine eigene Energiezufuhr benötigen, sondern durch die jeweilige Leseanordnung mit Energie versorgt werden können. Eine Energieversorgung kann insbesondere durch elektromagnetische Wechselfelder erfolgen. Aktive RFID-Transponder ermöglichen das Auslesen über verhältnismäßig große Distanzen.

Eine erfindungsgemäße Leseeinheit kann insbesondere zum Senden und Empfangen von Signalen mittels spezieller Antennen eingerichtet sein. Eine solche Leseeinheit kann ferner eine definierte Abstrahlcharakteristik aufweisen. Die Abstrahlcharakteristik kann in vorteilhafter Weise an die geometrischen Gegebenheiten des Lagerraums angepasst beziehungsweise im Hinblick auf den Lagerraum ausgewählt sein. Die Abstrahlcharakteristik kann insbesondere dazu ausgebildet sein, den gesamten Lagerraum, zumindest aber einen Großteil des Lagerraums und/oder der Lagerbereiche und/oder Lagerfächer zu erfassen.

Eine erfindungsgemäße Leseeinheit kann in bevorzugter Weise als Antenne ausgebildet sein. Die Leseeinheit kann dabei durch mindestens eine Antenne oder ein Antennenarray und/oder durch mehrere Antennen ausgebildet sein. Ebenso kann die Leseeinheit mindestens eine Antenne oder ein Antennenarray und/oder mehrere Antennen aufweisen.

Erfindungsgemäß weist die Leseanordnung zumindest eine Leseeinheit auf, die zur berührungslosen Identifikation und/oder Ortung von Transpondern in einem maximalen Abstand von bis zu 2,5 m, bevorzugt in einem maximalen Abstand von bis zu 2 m, eingerichtet ist. Die zumindest eine Leseeinheit ist derart angeordnet, dass Transponder in einem maximalen Abstand von bis zu 2,5 m, bevorzugt in einem maximalen Abstand von bis zu 2 m, zu der Leseeinheit innerhalb des Lagerraums positionierbar sind. In einem derartigen Abstand kann eine Positionsbestimmung und/oder -eingrenzung durch Laufzeitbestimmung mit verhältnismäßig hoher Sicherheit und/oder Genauigkeit erfolgen.

Erfindungsgemäß weist die Leseanordnung eine Mehrzahl von Referenztranspondern auf. Durch das Vorsehen einer Mehrzahl von Referenztranspondern kann die Positionsbestimmung von Transpondern, also von an oder in Waren angeordneten Warentranspondern, innerhalb des Lagerraums in vorteilhafter Weise vereinfacht werden. So besteht die Möglichkeit, durch Laufzeitbestimmung die Position von Warentranspondern relativ zu Referenztranspondern zu ermitteln und hierdurch auf besonders einfache Weise einen Rückschluss über die Position von Warentranspondern innerhalb des Lagerraums zu ziehen. Die Positionsbestimmung kann auf diese Weise mit einem besonders geringem Mess- beziehungsweise Rechenaufwand bewerkstelligt werden.

Weiter erfindungsgemäß sind die Referenztransponder der Leseanordnung innerhalb des Lagerraums angeordnet. Dabei sind innerhalb jedes Fachbodens ein Referenztransponder der Mehrzahl von Referenztranspondern mittig und mehrere Referenztransponder der Mehrzahl von Referenztranspondern randseitig angeordnet.

Hierdurch kann eine genaue Positionsbestimmung von Warentranspondern innerhalb des Lagerraums beziehungsweise relativ zur Ordnungsstruktur oder einem Ordnungselement der Ordnungsstruktur sichergestellt werden.

Es ist gemäß einer weiter bevorzugten Ausgestaltung möglich, dass die Position des Referenztransponders innerhalb des Lagerraums variabel und/oder werkzeugfrei anpassbar ist, insbesondere durch Höhenverstellung und/oder Neupositionierung eines Ordnungselements. So ist erfindungsgemäß ein Referenztransponder in einem Fachboden der Ordnungsstruktur angeordnet. Durch Positionsverstellung des jeweiligen Fachbodens innerhalb des Lagerraums kann somit auch die Position des jeweiligen Referenztransponders innerhalb des Lagerraums angepasst werden. Der durch den Referenztransponder definierte Referenzpunkt innerhalb des Lagerraums kann somit flexibel an die jeweiligen Einsatzbedingungen angepasst werden, wodurch sich die Einsatzflexibilität des erfindungsgemäßen Warenspeichers insgesamt verbessern lässt.

Ebenso ist es möglich, dass die Position des Referenztransponders innerhalb des Lagerraums permanent fixiert ist oder lediglich unter Einsatz von Werkzeugen veränderbar ist. Durch eine derartige permanente Fixierung des Referenztransponders kann eine besonders hohe Sicherheit in der Positionsbestimmung realisiert werden. Fehlerhafte Programmierungen oder die Gefahr von fehlerhaften Positionsbestimmungen können auf diese Weise vermieden werden.

In erfindungsgemäßer Weise ist jeder der Mehrzahl der Referenztransponder der Leseanordnung in einem Fachboden angeordnet, insbesondere in einem als Hohlboden ausgebildeten Fachboden und/oder in einer Ausnehmung eines Fachbodens. Einerseits kann hierdurch eine besonders platzsparende Anordnung des Referenztransponders realisiert werden. Gleichzeitig ermöglicht eine solche Ausgestaltung, dass der durch den Referenztransponder definierte Referenzpunkt mit der Position des jeweiligen Fachbodens übereinstimmt. Auf diese Weise kann mit verhältnismäßig geringem Aufwand festgestellt werden, ob sich ein Warentransponder oberhalb oder unterhalb des jeweiligen Fachbodens befindet. Die Positionsbestimmung kann hierdurch mit nur geringem Aufwand und verhältnismäßig großer Sicherheit vorgenommen werden.

Erfindungsgemäß ist die Leseanordnung beziehungsweise die Leseeinheit zur Bestimmung von Laufzeitdifferenzen zwischen wenigstens einem Referenztransponder und wenigstens einem innerhalb des Lagerraums angeordneten weiteren Transponder, insbesondere einem an einer Ware angeordneten Warentransponder, eingerichtet. Die Bestimmung von Laufzeitdifferenzen kann insbesondere Aufschluss über die Position des Warentransponders relativ zum Referenztransponder geben. Es kann beispielsweise festgestellt werden, ob ein Warentransponder näher an der jeweiligen Leseeinheit angeordnet ist als der jeweilige Referenztransponder, insbesondere wenn die Laufzeit in Bezug auf den Warentransponder kleiner ist als die Laufzeit in Bezug auf den Referenztransponder. Bei Kenntnis der Lage des Referenztransponders innerhalb des Lagerraums kann auf diese Weise die Position des jeweiligen Warentransponders festgestellt beziehungsweise zumindest eingegrenzt werden. Je nach Anzahl von Referenztranspondern innerhalb des Lagerraums lässt sich auf diese Weise eine verhältnismäßig genaue Positionsbestimmung beziehungsweise Positionseingrenzung des Warentransponders realisieren. Die Positionsbestimmung lässt sich somit auf besonders einfache Weise und verhältnismäßig geringem gerätetechnischem Aufwand vornehmen.

Weiter erfindungsgemäß ist die Leseanordnung und/oder Leseeinheit zur Positionsbestimmung aus Laufzeitdifferenzen zwischen einer Mehrzahl von Referenztranspondern und wenigstens einem Warentransponder eingerichtet. Die Genauigkeit der Positionsbestimmung lässt sich auf diese Weise weiter verbessern.

Erfindungsgemäß ist die Leseanordnung und/oder Leseeinheit zur Positionsbestimmung einer Ware relativ zu einer Ordnungsstruktur des Lagerraums und/oder relativ zu einem Gehäuse des Lagerraums eingerichtet. Erfindungsgemäß sein mehrere Referenztransponder an einer solchen Ordnungsstruktur vorgesehen.

Bei einer Positionsbestimmung unter Nutzung einer Ordnungsstruktur mit daran vorgesehenen Referenztranspondern wird eine besonders vorteilhafte Positionsbestimmung von Waren beziehungsweise Warentranspondern innerhalb vorgegebener Fachböden vorgenommen.

Der Zeitaufwand für das Auffinden einer Ware innerhalb des Lagerraums sowie ein damit einhergehender manueller Handhabungsaufwand für das Durchsuchen des Lagerraums kann auf diese Weise verringert werden.

Weiter erfindungsgemäß weist der Lagerraum eine Mehrzahl von Lagerfächern auf. Dabei kann die Leseanordnung und/oder die Leseeinheit zur Bestimmung der Fachposition einer Ware eingerichtet sein, insbesondere durch Bestimmung von Laufzeitdifferenzen zwischen einem Warentransponder und wenigstens einem Referenztransponder, bevorzugt einem der Fachposition zugeordneten Referenztransponder. Durch das Vorsehen vordefinierter und/oder veränderbarer Lagerflächen kann eine besonders vorteilhafte Unterteilung des Lagerraums mit vordefinierten Positionierflächen beziehungsweise Positionierzonen erzeugt werden.

Durch Bestimmung der Fachposition einer Ware kann ein Nutzer mit nur sehr begrenztem Aufwand die jeweils gewünschte Ware innerhalb des fraglichen Ablagefachs ausfindig machen und aus diesem entnehmen. Das Durchsuchen weiterer Ablagefächer und damit eines signifikanten Teils des Lagerraums kann somit unterbleiben. Der Nutzerkomfort kann hierdurch folglich verbessert und der Erhalt der Warenordnung innerhalb des Warenspeichers begünstigt werden.

In erfindungsgemäßer Weise ist zumindest eines der Lagerfächer nur bis zu einer fehlertoleranten Nutzungshöhe befüllbar. Ferner kann eine fehlertolerante Nutzungshöhe markiert sein. Die fehlertolerante Nutzungshöhe kann bevorzugt kleiner sein als die Fachhöhe und/oder als der vertikale Abstand zwischen zwei vertikal benachbarten Referenztranspondern. Ebenso kann die fehlertolerante Nutzungshöhe der Fachhöhe entsprechen.

Die Befüllbarkeit des zumindest einen Lagerfachs bis zu einer fehlertoleranten Nutzungshöhe wird erfindungsgemäß mittels Barrieren bewerkstelligt, nämlich mittels Barrieren an der Unterseite des Fachbodens, der dem zumindest einen der Lagerfächer übergeordnet ist. Durch solche Barrieren kann beispielsweise verhindert werden, dass ein Lagerfach bis unter den jeweils darüber angeordneten Fachboden befüllt wird. Sofern im darüber angeordneten Fachboden ein Referenztransponder angeordnet ist, können Warentransponder in dem darunter liegenden Lagerfach nur mit vertikalem Mindestabstand zu dem darüber liegenden Referenztransponder positioniert werden. Dies kann beispielsweise auch dadurch bewerkstelligt werden, dass die Fachböden in ausreichender Dicke ausgeführt werden. Aufgrund der Anordnung der Referenztransponder innerhalb eines derart dicken Fachbodens kann ein geeigneter vertikaler Mindestabstand zu Warentranspondern sichergestellt werden.

Je geringer ein vertikaler Abstand zwischen Transponder und Leseeinheit beziehungsweise zwischen Warentransponder und Referenztransponder, desto eher kann sich eine seitlich versetzte Anordnung auf die Betriebsgenauigkeit auswirken. Durch Festlegung einer fehlertoleranten Nutzungshöhe kann dieser Effekt reduziert werden. Insbesondere kann durch eine derartige Ausgestaltung hinsichtlich einer fehlertoleranten Nutzungshöhe die Genauigkeit der Positionsbestimmung und/oder -eingrenzung weiter erhöht werden. Die Betriebssicherheit und/oder Betriebsgenauigkeit kann insgesamt verbessert werden.

Gemäß einer noch weiter bevorzugten Ausgestaltung des Warenspeichers sind mehrere Referenztransponder vorgesehen, die relativ zur Leseanordnung und/oder Leseeinheit in unterschiedlichem und/oder gleichem Abstand und/oder entlang einer Raumlinie, insbesondere entlang einer vertikal verlaufenden Raumlinie, und/oder entlang einer horizontalen Ebene und/oder horizontal verlaufenden Referenzebene angeordnet sind. Ein zwischen derart positionierten Referenztranspondern angeordneter Warentransponder kann auf besonders vorteilhafte Weise hinsichtlich seiner Position bestimmt werden. Zudem kann auf diese Weise ein verhältnismäßig großer räumlicher Bestimmungsbereich abgedeckt werden.

Jeder der Mehrzahl von Referenztranspondern kann ferner stationär angeordnet und/oder gleichartig beziehungsweise vom gleichen Typ ausgebildet sein. Hierdurch kann die Erfassungssicherheit während der Bestimmung von Laufzeitdifferenzen verbessert werden. Fehlereinflüsse durch unterschiedliche Typen von Referenztranspondern können auf diese Weise verringert werden. Ferner können Warentransponder und Referenztransponder in vorteilhafter Weise als vom gleichen Typ ausgebildet sein.

Erfindungsgemäß ist die wenigstens eine Leseeinheit oberhalb der Mehrzahl an Referenztransponder angeordnet.

Erfindungsgemäß ist die Leseeinheit in einem Gehäusedach des Warenspeichers angeordnet. In diesem Fall ist der Lagerraum vollständig unterhalb der Leseeinheit ausgebildet, so dass durch die Anordnung der Leseeinheit die Ausgestaltung des Lagerraums beziehungsweise der Ordnungsstruktur durch die Leseanordnung nicht beeinträchtigt wird.

Gemäß einem Ausführungsbeispiel, das nicht der beanspruchten Erfindung entspricht, ist die wenigstens eine Leseeinheit unterhalb des zumindest einen Referenztransponders, bevorzugt der Mehrzahl an Referenztranspondern, angeordnet, insbesondere in oder an einem Gehäuseboden. Gemäß einer weiter bevorzugten Ausgestaltung kann die Leseanordnung eine Mehrzahl von Leseeinheiten aufweisen, wodurch die Bestimmungsgenauigkeit für die Position von Warentranspondern verbessert werden kann. Es besteht insbesondere die Möglichkeit, dass sowohl im Gehäusedach als auch im Gehäuseboden jeweils eine Leseeinheit vorgesehen ist, wodurch die Lesegenauigkeit weiter verbessert werden kann. Hierdurch kann in vorteilhafter Weise eine oberseitige und unterseitige Einfassung des Lagerraums durch die Leseeinheiten realisiert werden.

In weiter bevorzugter Weise können Leseeinheiten oberhalb und unterhalb der Referenztransponder für gegenseitige Korrekturmessungen, Überprüfungsmessungen, Vergleichsmessungen und/oder Differenzmessungen bei Laufzeitbestimmungen eingerichtet sein. Die Gesamtgenauigkeit lässt sich auf diese Weise weiter verbessern und damit die Gefahr fehlerhafter Positionsbestimmungen und/oder -eingrenzungen verringern.

In noch weiter bevorzugter Ausgestaltung kann wenigstens eine Leseeinheit mittig in oder an einem Gehäusedach und/oder wenigstens eine Leseeinheit mittig in oder an einem Gehäuseboden angeordnet sein. Die räumliche Abdeckung des Lagerraums durch die jeweilige Leseeinheit kann auf diese Weise relativ gleichmäßig erfolgen.

Gemäß einer weiter bevorzugten Ausgestaltung kann eine Mehrzahl von Referenztranspondern eine Referenzebene definieren, insbesondere eine Mehrzahl auf einer Höhe des Lagerraums und/oder auf einer Höhe relativ zum Lagerraum angeordnete Referenztransponder eine Referenzebene definieren. Es kann somit eine Positionserfassung und/oder -eingrenzung im Hinblick auf eine solche Referenzebene erfolgen. Insbesondere kann ermittelt werden, ob sich ein Warentransponder oberhalb oder unterhalb einer solchen Referenzebene befindet.

In bevorzugter Weise kann sich ein Fachboden und/oder Bodeneinsatz und/oder Gitterboden entlang einer Referenzebene erstrecken. Ferner können mehrere in einem Fachboden angeordnete Referenztransponder eine Referenzebene definieren.

In weiter bevorzugter Weise kann eine Referenzebene durch wenigstens einen mittig angeordneten Referenztransponder und zumindest einen randseitig angeordneten Referenztransponder definiert sein. Der Abstand zwischen einer Leseeinheit der Leseanordnung und einem mittig angeordneten Referenztransponder kann von dem Abstand zwischen der Leseeinheit und einem randseitig angeordneten Referenztransponder abweichen. In bevorzugter Weise kann eine fehlertolerante Nutzungshöhe des jeweiligen Lagerfachs auf Grundlage einer solchen Abweichung definiert sein. Die Betriebsgenauigkeit und/oder Betriebssicherheit kann auf diese Weise weiter verbessert werden.

In weiter bevorzugter Weise kann ein Referenzabstand zur Leseeinheit der Leseanordnung durch eine Mehrzahl von Referenztranspondern und/oder durch eine aus Referenztranspondern gebildete Referenzebene markiert sein, insbesondere durch mehrere voneinander unabhängig angeordnete Referenztransponder und/oder eine Referenzebene definierende Referenztransponder. Die Erfassungssicherheit beziehungsweise die Genauigkeit der Positionsbestimmung kann auf diese Weise weiter verbessert und somit die Gefahr einer fehlerhaften Positionsbestimmung verringert werden.

Wenigstens zwei Referenztransponder einer Referenzebene können zur Leseeinheit denselben Abstand oder einen unterschiedlichen Abstand aufweisen. Beispielsweise können zwei randseitig angeordnete Referenztransponder zu einer Leseeinheit denselben Abstand aufweisen. Ein randseitig angeordneter Referenztransponder und ein mittig angeordneter Referenztransponder können zu einer Leseeinheit unterschiedliche Abstände aufweisen. Gleiche und unterschiedliche Abstände können zur Positionsbestimmung und/oder -eingrenzung berücksichtigt werden.

In weiter bevorzugter Weise kann die Leseanordnung eine Mehrzahl von Leseeinheiten aufweisen. Beispielsweise können im Gehäusedach und/oder Gehäuseboden mehrere sogenannte Arrays von Leseeinheiten angeordnet sein, sodass sich eine besonders günstige Abdeckung des Lagerraums durch die Leseeinheiten ergibt. Bei mehreren Leseeinheiten wird in vorteilhafter Weise die Positionsbestimmung und/oder -eingrenzung wiederum nur auf Grundlage der jeweils kürzesten Signallaufzeit vorgenommen. Hierbei kann es entscheidend sein, welche der Leseeinheiten das jeweilige Transpondersignal empfängt, um Rückschlüsse auf die jeweils kürzeste Signallaufzeit ziehen zu können.

Es kann ferner von Vorteil sein, wenn die Leseanordnung kalibrierbar und/oder kalibriert ist, insbesondere durch Auswahl einer Position eines Referenztransponders und durch Ausführen zumindest einer Referenzmessung für die Signallaufzeit. Es kann demzufolge wenigstens ein Referenztransponder in vorbestimmter Position angeordnet werden. Eine solche Anordnung kann entweder fest vorgegeben oder durch einen Anwender beziehungsweise Betreiber des Warenspeichers anwendungsspezifisch ausgewählt werden. Die Position des jeweiligen Referenztransponders ist durch die gezielte Anordnung demnach bekannt. Im Anschluss kann zumindest eine Referenzmessung für die Signallaufzeit durchgeführt werden, so dass die bekannte Position des Referenztransponders mit der jeweiligen Signallaufzeit in Verbindung gesetzt wird beziehungsweise zu dieser korrespondiert und entsprechend gespeichert werden kann. Durch eine derartige Kalibrierung kann also eine Signallaufzeit zu der bekannten Position des Referenztransponders ermittelt werden. In der Folge können Laufzeitdifferenzen zu Warentranspondern einen verhältnismäßig genauen Rückschluss über die Position des jeweiligen Warentransponders in dem Lagerraum gezogen werden. Die Positionsbestimmung der Warentransponder und damit der jeweiligen Waren kann somit in hoher Genauigkeit und mit geringem Aufwand vorgenommen werden.

In weiter bevorzugter Weise kann die Leseanordnung kalibrierbar und/oder kalibriert sein durch zumindest eine Referenzmessung frei von Warentranspondern und/oder durch ausschließliche Referenzmessung für die Signallaufzeit zwischen einer Leseeinheit und wenigstens einem Referenztransponder. Fehlereinflüsse durch Warentransponder lassen sich auf diese Weise für die Kalibrierung vermeiden.

Weiterhin kann die Leseanordnung in bevorzugter Weise kalibrierbar und/oder kalibriert sein durch Referenzmessungen bezüglich einer Mehrzahl von Referenzebenen. Es lassen sich auf diese Weise besonders viele Erfassungsbereiche vordefinieren, sodass sich für den Betrieb eine Vielzahl von Erfassungskonstellationen ergeben.

In weiter bevorzugter Weise kann eine Kalibrierung der Leseanordnung auf Grundlage der jeweils kürzesten Signallaufzeit zwischen einer Leseeinheit und wenigstens einem Referenztransponder erfolgt sein, insbesondere auf Grundlage der jeweils kürzesten Signallaufzeit und/oder den jeweils kürzesten Signallaufzeiten im ungestörten elektromagnetischen Feld und/oder frei von Reflexionen. Die Genauigkeit der Kalibrierung kann auf diese Weise verbessert werden.

Weiter bevorzugt kann die Leseanordnung zur Positionsbestimmung von Transpondern durch Multilateration und/oder Multiangulation, insbesondere Triangulation, eingerichtet sein, insbesondere durch Multilateration und/oder Triangulation mittels einer Mehrzahl von Leseeinheiten. Bei der Positionsbestimmung durch Multilateration und/oder Multiangulation, insbesondere Triangulation, kann eine örtlich präzise Positionsbestimmung der Transponder vorgenommen werden, so dass der Handhabungsaufwand für das Auffinden und Entnehmen von Waren aus dem Lagerraum des Warenspeichers weiter verringert werden kann.

Es kann weiter von Vorteil sein, wenn zumindest eine Leseeinheit der Leseanordnung relativ zum Lagerraum beweglich angeordnet ist oder zur berührungslosen Identifikation von Transpondern aus unterschiedlichen Positionen relativ zum Lagerraum eingerichtet ist. Die Positionsbestimmung von Transpondern kann somit durch Messungen aus unterschiedlichen Positionen verifiziert werden, so dass die Erfassungssicherheit und Genauigkeit der Positionsbestimmung weiter verbessert werden kann. Insbesondere kann die zumindest eine Leseeinheit der Leseanordnung zur Positionsbestimmung von Transpondern durch Laufzeitbestimmungen aus unterschiedlichen Positionen der Leseeinheit relativ zum Lagerraum eingerichtet sein. Es kann dementsprechend die Leseeinheit zunächst eine Laufzeitbestimmung aus einer ersten Position vornehmen. Anschließend kann die Leseeinheit verfahren werden in eine weitere Position und aus dieser weiteren Position eine weitere Laufzeitbestimmung vorgenommen werden. Aus beiden Laufzeitbestimmungen kann dann eine verhältnismäßig genaue beziehungsweise sichere Positionsbestimmung abgeleitet werden.

Nach einer weiteren Ausführungsform des erfindungsgemäßen Warenspeichers kann die Leseanordnung und/oder Leseeinheit zur Mehrfacherfassung und/oder zur Bulkerfassung eingerichtet sein, bevorzugt zur Mehrfach- beziehungsweise Bulkerfassung von Warentranspondern und/oder Referenztranspondern. Auf diese Weise kann die Positionsbestimmung einer Vielzahl von Warentranspondern innerhalb des Lagerraums mit nur geringem Aufwand bewerkstelligt werden, so dass ein Nutzer in einem kurzen Zeitraum über die Position einer Vielzahl von Waren beziehungsweise Warentranspondern informiert werden kann.

In vorteilhafter Weise kann eine Mehrzahl von Transpondern gleichzeitig und/oder nacheinander identifizierbar sein. Hierdurch kann eine ressourcensparende Positionsbestimmung von Warentranspondern realisiert werden.

Erfindungsgemäß ist die wenigstens eine Leseeinheit der Leseanordnung zur Identifikation eines Transponders und der korrespondierenden Signallaufzeitbestimmung eingerichtet. Es wird auf diese Weise der jeweilige Transponder identifiziert und die Signallaufzeit zwischen der Leseeinheit und diesem Transponder bestimmt. In der Folge kann durch Bestimmung von Laufzeitdifferenzen die Position des jeweiligen Transponders bestimmt und aufgrund der Identifikation des Transponders die Position der Ware, an der der Transponder befestigt ist, ermittelt werden. Eine solche Ausgestaltung der Leseeinheit ermöglicht eine besonders effiziente Positionsbestimmung von Transpondern sowie der jeweiligen Waren.

Gemäß einer weiter vorteilhaften Ausgestaltung des Warenspeichers kann die Leseanordnung eine Auswerteeinheit zur Signalauswertung und/oder zur Warenbestandsauswertung und/oder dynamischen Zugriffsauswertung aufweisen. Die Signalauswertung kann die Speicherung, den Vergleich und die Bestimmung der jeweils kürzesten relevanten Signallaufzeiten des identifizierten Warentransponders mit dem räumlich nächsten Referenztransponder voraussetzen beziehungsweise erfordern. Die Auswertung der gewonnenen Daten beziehungsweise Signale kann auf diese Weise mit hoher Sicherheit beziehungsweise Zuverlässigkeit vorgenommen und eine weitere Verarbeitung der Daten beziehungsweise Signale gewährleistet werden. Die Funktionalität des Warenspeichers wird auf diese Weise vorteilhaft erweitert und bietet insbesondere den Betreibern eines solchen Warenspeichers geeignete Reaktionsmöglichkeiten im Hinblick auf Warenbestandsveränderungen.

Ferner kann in vorteilhafter Weise eine Auswerteeinheit zur periodischen und/oder wiederkehrenden und/oder dynamischen Warenbestands- und/oder Warenpositionsauswertung eingerichtet sein. Es kann auf diese Weise laufend der Zustand des Lagerraums beziehungsweise der Bestand sowie die Position der darin angeordneten Waren ermittelt und gespeichert werden. Aus den entsprechenden Daten können sowohl für den Betreiber als auch etwaige Nutzer des Warenspeichers geeignete Rückschlüsse über die Verfügbarkeit beziehungsweise die Position von Waren innerhalb des Warenspeichers gezogen und damit die Nutzerfreundlichkeit sowie die Betreiberfreundlichkeit des Warenspeichers verbessert werden.

In weiter bevorzugter Weise kann eine Auswerteeinheit zur algorithmusbasierten Auswertung, insbesondere selbstoptimierenden algorithmusbasierten Auswertung, eingerichtet sein, wodurch die Funktionalität weiter verbessert werden kann. Weiter bevorzugt kann eine Auswerteeinheit als Server ausgebildet und/oder serverseitig eingerichtet sein. Eine Auswertung kann insbesondere auf einem Server und/oder in einer Cloud erfolgen. Eine derartige Ausgestaltung erlaubt in besonders vorteilhafter Weise die Nutzung externer Ressourcen und kann damit besonders kostengünstig ein hohes Maß an Funktionalität sicherstellen.

In weiter vorteilhafter Weise kann die Leseanordnung eine Anzeigeeinrichtung zur Anzeige von erfassten Waren und/oder Warenpositionen aufweisen. Eine solche Anzeigeeinrichtung kann in weiter vorteilhafter Weise zur dynamischen Warenpositions- und/oder Warenbestandswiedergabe eingerichtet sein. Die Anwenderfreundlichkeit des Warenspeichers kann auf diese Weise weiter verbessert werden. Beispielsweise kann ein Nutzer oder Betreiber eines derartigen Warenspeichers auf einfache Weise an der Anzeigeeinrichtung Informationen zu erfassten Waren beziehungsweise Warenpositionen ablesen und dadurch das Auffinden beziehungsweise Entnehmen einer Ware erleichtern. Ebenso kann durch eine Warenbestandswiedergabe gegebenenfalls erforderliche Beschickungsprozesse initiiert und/oder beschleunigt werden.

Weiter bevorzugt kann die Leseanordnung eine Anzeigeeinrichtung zur Anzeige der Konfiguration der Ordnungsstruktur und/oder der Position einzelner Ordnungselemente ausgebildet sein. Es kann beispielsweise an einer Anzeige angezeigt und abgelesen werden, an welcher Position sich einzelne Fachböden befinden und ob gegebenenfalls eine Rekonfiguration beziehungsweise Neupositionierung einzelner Fachböden für eine neue Anwendungssituation erforderlich ist. Eine derartige graphische Anzeige kann zudem eine gegebenenfalls erforderliche Neupositionierung oder Rekonfiguration der Fachböden innerhalb des Lagerraums unterstützen, nämlich durch graphisch unterstützte Bedienerhinweise. Etwaige Fehlanordnungen oder anwendungsuntaugliche Konfigurationen der Ordnungsstruktur können auf diese Weise verhindert werden.

Weiter bevorzugt kann eine Anzeigeeinrichtung zur selbsttätigen Anpassung eines graphischen Anzeigelayouts eingerichtet sein, insbesondere eines von der Konfiguration der Ordnungsstruktur abhängigen Anzeigelayouts. Eine jeweils gewählte Konfiguration der Ordnungsstruktur kann beispielsweise automatisiert im graphischen Anzeigelayout wiedergegeben werden. Ebenso ist es möglich, dass das graphische Anzeigelayout manuell nach erfolgter Rekonfiguration oder Neupositionierung einzelner Ordnungselemente oder der gesamten Ordnungsstruktur anzupassen ist, wodurch der gerätetechnische Aufwand geringgehalten werden kann.

Ein weiteres Beispiel, das nicht der beanspruchten Erfindung entspricht, betrifft einen Warenspeicher, insbesondere für mit Transponder versehene Waren, mit einem Lagerraum zur Auf- und/oder Entnahme von Waren und mit einer Leseanordnung zur berührungslosen Identifikation von und zum Vergleich der Laufzeiten zu Warentranspondern und Referenztranspondern, wobei die Leseanordnung zur Positionsbestimmung und/oder -eingrenzung von Warentranspondern innerhalb des Lagerraums durch Vergleich von Laufzeiten eingerichtet ist.

Ein weiteres Beispiel, das nicht der beanspruchten Erfindung entspricht, betrifft einen Warenspeicher, insbesondere für mit Transponder versehene Waren, mit einem Lagerraum zur Auf- und/oder Entnahme von Waren und mit einer Leseanordnung zur berührungslosen Identifikation von Waren- und Referenztranspondern, wobei die Leseanordnung zur Positionsbestimmung und/oder -eingrenzung von Warentranspondern innerhalb des Lagerraums durch Vergleich der Laufzeiten zu Warentranspondern und Referenztranspondern eingerichtet ist.

Ein weiteres Beispiel, das nicht der beanspruchten Erfindung entspricht, betrifft einen Warenspeicher, insbesondere für mit Transponder versehene Waren, mit einem Lagerraum zur Auf- und/oder Entnahme von Waren und mit einer Leseanordnung zur berührungslosen Identifikation von Transpondern, wobei die Leseanordnung zur Positionsbestimmung und/oder -eingrenzung von Transpondern innerhalb des Lagerraums durch Multilateration eingerichtet ist.

Ein weiteres Beispiel, das nicht der beanspruchten Erfindung entspricht, betrifft einen Warenspeicher, insbesondere für mit Transponder versehene Waren, mit einem Lagerraum zur Auf- und/oder Entnahme von Waren und mit einer Leseanordnung zur berührungslosen Identifikation von Transpondern, wobei die Leseanordnung zur Positionsbestimmung und/oder -eingrenzung von Transpondern innerhalb des Lagerraums durch Multiangulation, insbesondere Triangulation, eingerichtet ist. Ein weiterer unabhängiger Aspekt der vorliegenden Erfindung betrifft ein Verfahren zur Positionsbestimmung von als Textilien ausgebildete Waren in einem voranstehend beschriebenen Warenspeicher. Bei einem solchen Verfahren wird wenigstens eine mit einem Warentransponder versehene Ware in einem Lagerraum eines Warenspeichers angeordnet und eine Leseanordnung identifiziert den Transponder der Ware berührungslos. Schließlich wird durch Laufzeitbestimmung dessen Position im Lagerraum bestimmt und/oder eingegrenzt.

Es kann sich insbesondere um ein Verfahren zur Ortsbestimmung von Waren in einem Warenspeicher handeln. Bei der Bestimmung und/oder Eingrenzung der Position im Lagerraum kann es sich somit um eine Ortsbestimmung von Waren handeln, insbesondere eine Ortsbestimmung relativ zu einer fachbezogenen Ordnung.

Ein solches Verfahren ermöglicht die Positionsbestimmung von Waren innerhalb eines Lagerraums mit nur geringem Aufwand bei verhältnismäßig hoher Genauigkeit, so dass insgesamt die Anwenderfreundlichkeit verbessert werden kann.

Erfindungsgemäß erfasst die Leseanordnung die Laufzeitdifferenz zwischen einem Warentransponder und einem Referenztransponder. Dabei wird aus einer erfassten Laufzeitdifferenz zwischen einem Warentransponder und einem Referenztransponder eine Position des Warentransponders ermittelt.

Die in Bezug auf den Warenspeicher voranstehend beschriebenen Einzelheiten gelten gleichermaßen auch für das erfindungsgemäße Verfahren zur Positionsbestimmung von Waren in einem Warenspeicher.

Weitere Ausgestaltungen der vorliegenden Erfindung ergeben sich aus Kombinationen der in den Ansprüchen offenbarten Merkmale. Die vorliegende Erfindung wird nachfolgend anhand von Ausführungsbeispielen und zugehörigen Zeichnungen erläutert.

Es zeigen jeweils schematisch:

Fig. 1     einen Warenspeicher für mit Transponder versehene Waren gemäß einem Ausführungsbeispiel der vorliegenden Offenbarung in Perspektivdarstellung,

Fig. 2     eine Vorderansicht eines Warenspeichers gemäß einem Ausführungsbeispiel der vorliegenden Offenbarung,

Fig. 3     eine Vorderansicht eines Warenspeichers gemäß einer Ausführungsform der vorliegenden Offenbarung mit schematisch angedeuteter Laufzeitmessung beziehungsweise Laufzeitbestimmung in einer Ein-Ebenen-Darstellung,

Fig. 4a    eine Perspektivdarstellung eines Warenspeichers gemäß einer Ausführungsform der vorliegenden Erfindung mit angedeuteter Laufzeitmessung beziehungsweise Laufzeitbestimmung,

Fig. 4b    Abstände zwischen einer Leseeinheit und unterschiedlichen Referenztranspondern einer Referenzebene.

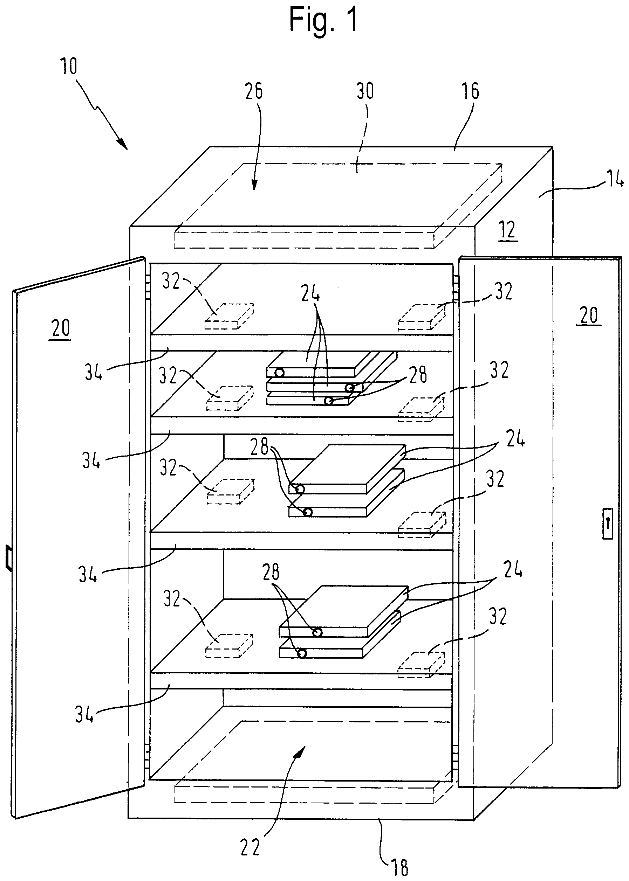

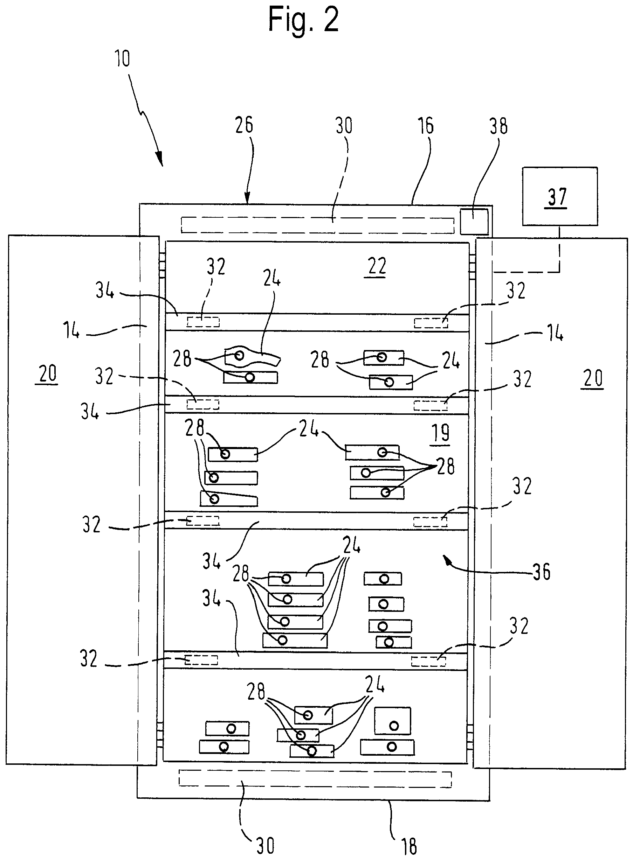

Die Fig. 1 zeigt einen Warenspeicher 10 gemäß einem Ausführungsbeispiel der vorliegenden Offenbarung in schematischer Perspektivdarstellung und Fig. 2 zeigt einen Warenspeicher 10 in einer Vorderansicht. Der Warenspeicher 10 kann in vorteilhafter Weise als Warenschrank beziehungsweise in schrankartiger Konstruktion ausgebildet sein.

Der Warenspeicher 10 weist ein Gehäuse 12 auf, welches den Außenumfang des Warenspeichers 10 zumindest abschnittsweise definiert. So kann das Gehäuse 12 aus zwei Seitenwänden 14 einem Gehäusedach 16, einem Gehäuseboden 18 sowie einer Gehäuserückwand 19, wie in Fig. 2 gezeigt, bestehen. An dem Gehäuse 12 ist ferner eine Schließvorrichtung zum Verschließen des Warenspeichers 10 beziehungsweise des Gehäuses vorgesehen.

Die Schließvorrichtung kann beispielsweise in Form von Schwenktüren 20 ausgebildet sein, welche an der Vorderseite des Gehäuses 12 angeordnet sind. Die Schließvorrichtung kann auch aus einer einzigen Schwenktür, einem Rolltor oder einem Rollgitter bestehen. Die Seitenwände 14, das Gehäusedach 16, der Gehäuseboden 18, sowie die Schwenktüren 20 sind ferner auch aus der Vorderansicht gemäß Fig. 2 zu erkennen.

Der Warenspeicher 10, wie in den Fig. 1 und 2 dargestellt, weist ferner einen Lagerraum 22 zur Auf- und/oder Entnahme von Waren 24 auf. Dabei wird der Lagerraum 22 seitlich durch die Seitenwände 14, nach oben durch das Gehäusedach 16 und nach unten durch den Gehäuseboden 18 begrenzt. In Richtung einer Hinterseite wird der Lagerraum 22 durch die Gehäuserückwand 19, wie in der Fig. 2 gezeigt, begrenzt. Hin zu einer Vorderseite kann der Lagerraum durch das Verschließen der Schwenktüren 20 begrenzt werden.

Der Warenspeicher 10 gemäß den Fig. 1 und 2 weist ferner eine Leseanordnung 26 zur berührungslosen Identifikation von Transpondern auf. Dabei ist die Leseanordnung 26 zur Positionsbestimmung von Transpondern innerhalb des Lagerraums 22 durch Laufzeitbestimmung eingerichtet.

Bei den Transpondern handelt es sich insbesondere um Warentransponder 28, die an oder in einer Ware 24 angeordnet, insbesondere unlösbar mit den Waren 24 verbunden sein können.

Die Waren 24 mit dem jeweils daran angeordneten Transponder 28 können in den Lagerraum 22 eingebracht beziehungsweise darin deponiert werden. Im Vorfeld einer Entnahme der jeweiligen Waren 24 aus dem Lagerraum 22 kann durch die Leseanordnung 26 die Position der Transponder 28 im Lagerraum 22 durch Laufzeitbestimmung ermittelt werden. Auf diese Weise kann der Entnahmeprozess für eine Ware 24 aus dem Lagerraum 22 besonders handhabungsfreundlich vorgenommen werden. Ein Nutzer kann dadurch gezielt in einem eingegrenzten Bereich des Lagerraums 22 nach der gewünschten Ware 24 suchen, wodurch auch die Ordnung der Waren 24 in übrigen Bereichen des Lagerraums 22 weitgehend aufrechterhalten werden kann.

Die Leseanordnung 26 weist wenigstens eine Leseeinheit 30 auf. Die Leseeinheit 30 ist im Gehäusedach 16 angeordnet. Gemäß einem Ausführungsbeispiel, das nicht der beanspruchten Erfindung entspricht, ist es möglich, dass eine Leseeinheit 30 im Gehäuseboden 28 angeordnet ist. Schließlich können auch eine Leseeinheit 30 im Gehäusedach 16 und ferner eine Leseeinheit 30 im Gehäuseboden 18 vorgesehen sein. Es können im Gehäusedach 16 beziehungsweise im Gehäuseboden 28 auch jeweils eine Mehrzahl an Leseeinheiten 30 angeordnet sein.

Die Leseanordnung 26 weist eine Mehrzahl von Referenztranspondern 32 auf. Insbesondere sind mehrere Referenztransponder 32 verteilt innerhalb des Lagerraums 22 vorgesehen.

Durch die Referenztransponder 32 werden Referenzpunkte im Raum definiert beziehungsweise markiert. Die Lage der Referenztransponder 32 im Raum ist aufgrund der definierten Anordnung bekannt. In dieser Stellung können nun Referenzmessungen mittels der Leseeinheit 30 vorgenommen werden. Durch diese Referenzmessungen können Signallaufzeiten zwischen der jeweiligen Leseeinheit 30 und dem jeweiligen Referenztransponder 32 ermittelt und auch gespeichert werden. Hierdurch erfolgt eine Kalibrierung dieser Leseanordnung 26.

Nach einer Rekonfiguration beziehungsweise Neupositionierung der Referenztransponder 32 im Lagerraum 22 kann eine solche Kalibrierung in vorteilhafter Weise wiederholt werden, um für die jeweils vorhandene Position der Referenztransponder 32 eine Referenzsignallaufzeit zu ermitteln und zu speichern.

In den Fig. 1 und 2 ist ferner zu sehen, dass der Lagerraum 22 durch eine Mehrzahl von Fachböden 34 unterteilt ist. Die Fachböden 34 dienen zur Aufnahme beziehungsweise zur Ablage von Waren 24 an definierten Positionen innerhalb des Lagerraums 22. Die Fachböden 34 bilden damit eine Ordnungsstruktur 36.

Gemäß einem Ausführungsbeispiel, das nicht der beanspruchten Erfindung entspricht, ist eine geeignete Ordnungsstruktur 36 durch eine Gitteranordnung oder dergleichen gebildet.

In dem Ausführungsbeispiel gemäß den Fig. 1 und 2 sind die Referenztransponder 32 jeweils innerhalb eines Fachbodens 34 angeordnet, insbesondere in einem Hohlraum oder einer Ausnehmung des jeweiligen Fachbodens 34. Durch Neupositionierung des jeweiligen Fachbodens 34 innerhalb des Lagerraums 22 kann somit auch eine Neupositionierung der Referenztransponder 32 erfolgen. Die Neupositionierung von Fachböden 34 innerhalb des Lagerraums 22 kann auf einfache Weise durch entsprechende Aufnahmen, Aufnahmeschienen beziehungsweise Aufnahmevorsprünge an der Innenseite der Seitenwände 14 realisiert werden.

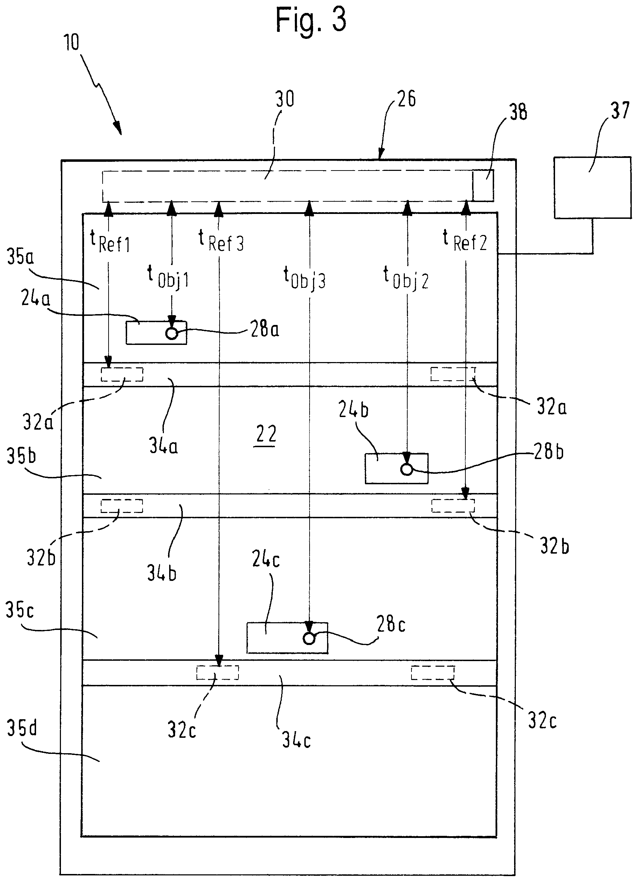

Die Fig. 3 zeigt einen Warenspeicher 10 gemäß einem Ausführungsbeispiel der vorliegenden Offenbarung mit schematisch angedeuteter Laufzeitbestimmung für Warentransponder 28. Die Laufzeitmessungen sind in der Fig. 3 aus Vereinfachungsgründen durch parallele Pfeile angedeutet worden. Unter der Annahme, dass die Leseanordnung 26 lediglich mit einer Leseeinheit 30 ausgestattet ist, handelt es sich bei der Fig. 3 um eine stark idealisierte Darstellung.

Wie in der Fig. 3 dargestellt, befindet sich auf dem Fachboden 34a und damit im Lagerfach 35a eine Ware 24a. Auf dem Fachboden 34b und damit im Lagerfach 35b befindet sich eine Ware 24b und auf dem Fachboden 34c und damit im Lagerfach 35c befindet sich eine Ware 24c.

Durch die Leseanordnung 26 kann nun eine Positionsbestimmung der Transponder 28a, 28b und 28c innerhalb des Lagerraums 22 vorgenommen werden.

Hierzu werden die Signallaufzeiten zwischen der Leseeinheit 30 und den jeweiligen Transpondern 28a, 28b und 28c bestimmt, gespeichert und ins Verhältnis gesetzt mit den gespeicherten Signallaufzeiten zwischen der Leseeinheit 30 und den Referenztranspondern 32a, 32b, 34c, die ihrerseits in den Fachböden 34a, 34b und 34c angeordnet sind.

Wird nun durch die Leseeinheit 30 festgestellt, dass die Signallaufzeit $t_{Obj1}$ zwischen Leseeinheit 30 und Warentransponder 28a kleiner ist als die Signallaufzeit $t_{Ref1}$ zwischen Leseeinheit 30 und Referenztransponder 32a, dann kann geschlussfolgert werden, dass sich der Warentransponder 28a und somit auch die Ware 24a oberhalb des Fachbodens 34a und damit im Lagerfach 35a befindet.

Wird ferner festgestellt, dass die Signallaufzeit $t_{Obj2}$ zwischen Leseeinheit 30 und Warentransponder 28b der Ware 24b kleiner ist als die Signallaufzeit $t_{Ref2}$ zwischen Leseeinheit 30 und Referenztransponder 32b, dann kann geschlussfolgert werden, dass sich der Transponder 28b mit der Ware 24b oberhalb des Fachbodens 34b und damit in Lagerfach 35b befindet. Ist nun auch die Signallaufzeit $t_{Obj2}$ größer als die Signallaufzeit $t_{Ref1}$, kann geschlussfolgert werden, dass sich die Ware 24b zusammen mit dem Transponder 28b unterhalb des Fachbodens 34a und damit im Lagerfach 35b befindet.

Wird ferner festgestellt, dass die Signallaufzeit $t_{Obj3}$ zwischen der Leseeinheit 30 und dem Warentransponder 28c kleiner ist als die Signallaufzeit $t_{Ref3}$ zwischen der Leseeinheit 30 und dem Referenztransponder 32c, kann geschlussfolgert werden, dass sich der Warentransponder 28c und damit auch die Ware 24c oberhalb des Fachbodens 34c und damit im Lagerfach 35c befindet. Wird darüber hinaus festgestellt, dass die Signallaufzeit $t_{Obj3}$ zwischen der Leseeinheit 30 und dem Warentransponder 28c größer ist als die Signallaufzeit $t_{Ref2}$ zwischen der Leseeinheit 30 und dem Referenztransponder 32b, kann ferner geschlussfolgert werden, dass sich die Ware 24c zusammen mit dem Transponder 28c unterhalb des Fachbodens 34b und damit im Lagerfach 35c befindet.

Auf diese Weise lässt sich mit nur geringem Aufwand und mit verhältnismäßig hoher Sicherheit eine Positionsbestimmung für mit Transponder 28 versehene Waren 24 innerhalb eines Lagerraums 22 bewerkstelligen. Ein Nutzer des Warenspeichers 10 kann auf diese Weise besonders vorteilhaft über die Position derjeweils gewünschten Ware 24 bezogen auf Ihre Lagerung beziehungsweise auf das jeweilige Lagerfach in Kenntnis gesetzt werden, so dass ein etwaiger Entnahmeprozess aus dem Lagerraum 22 mit geringem Zeitaufwand realisiert werden kann.

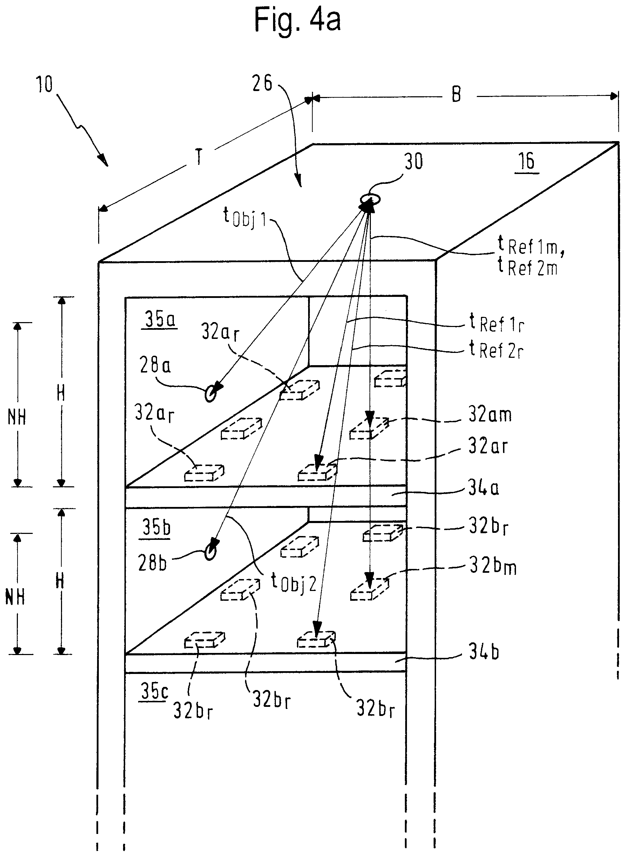

Die Fig. 4a zeigt eine Perspektivdarstellung eines Warenspeichers 10 gemäß einer beispielhaften Ausführungsform der vorliegenden Erfindung mit angedeuteter Laufzeitmessung. Gemäß Fig. 4a ist mittig im Gehäusedach 16 eine Leseeinheit 30 angeordnet. Die Leseeinheit 30 ist hier punktuell dargestellt, um unterschiedliche Abstände zu Referenztranspondern 32a oder 32b einer Referenzebene zu veranschaulichen, wie nachfolgend noch erläutert wird.

In Fig. 4a ist unterhalb des Gehäusedachs 16 ein Fachboden 34a und unterhalb des Fachbodens 34a ein weiterer Fachboden 34b angeordnet. Durch die Fachböden 34a und 34b werden die Lagerfächer 35a und 35b definiert. Die Lagerfächer 35a und 35b weisen jeweils eine Fachhöhe H, eine Fachbreite B sowie eine Fachtiefe T auf. In bevorzugter Weise können die Lagerfächer 35a und 35b mit einem Verhältnis der Fachbreite B zur Fachhöhe H und/oder mit einem Verhältnis der Fachtiefe T zur Fachhöhe H von < 2, insbesondere von < 1,5, bevorzugt von < 1, weiter bevorzugt von < 0,75, weiter bevorzugt von < 0,5, ausgebildet sein.

Innerhalb des Fachbodens 34a sind ein mittig angeordneter Referenztransponder $32a_m$ und mehrere randseitig angeordnete Referenztransponder $32a_r$ vorgesehen. Innerhalb des Fachbodens 34b sind ein mittig angeordneter Referenztransponder $32b_m$ und mehrere randseitig angeordnete Referenztransponder $32b_r$ vorgesehen. Im oberen Lagerfach 35a ist beispielhaft jeweils ein Warentransponder 28a und im unteren Lagerfach 35b beispielhaft ein Warentransponder 28b dargestellt.

Zwischen der Leseeinheit 30 und den jeweiligen Referenztranspondern 32 beziehungsweise Warentranspondern 28 wird die jeweils kürzeste Signallaufzeit bestimmt. Besonders bevorzugt kann die Leseanordnung 26 zur Laufzeitbestimmung auf Grundlage der jeweils kürzesten Signallaufzeit zwischen der Leseeinheit 30 und dem jeweiligen Referenztransponder 32 und/oder dem jeweiligen Warentransponder 28 im ungestörten elektromagnetischen Feld, insbesondere frei von Reflexionen, eingerichtet sein.

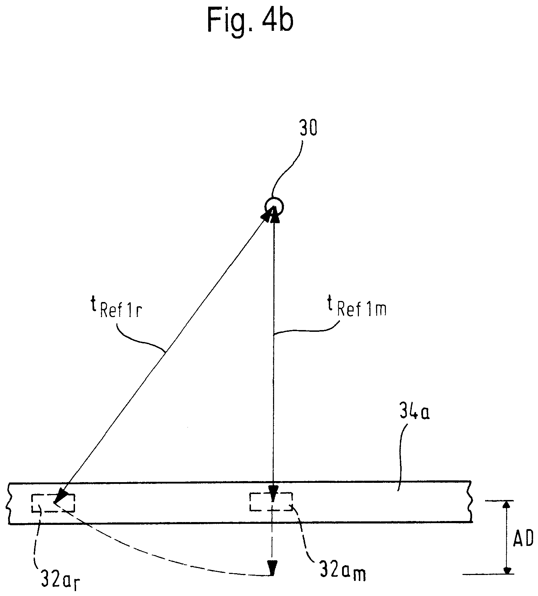

Aus der Darstellung in Fig. 4a ist unmittelbar ersichtlich, dass der Abstand zwischen der mittig angeordneten Leseeinheit 30 und dem mittig angeordneten Referenztransponder $32a_m$ geringer ist als zwischen der Leseeinheit 30 und einem randseitig angeordneten Referenztransponder $32a_r$. Entsprechend ist der Abstand zwischen der Leseeinheit 30 und dem mittig angeordneten Referenztransponder $32b_m$ geringer als zwischen der Leseeinheit 30 und einem randseitig angeordneten Referenztransponder $32b_r$. Die Abstandsverhältnisse in Bezug auf die Referenztransponder $32a_m$ sowie $32a_r$ sind in Fig. 4b näher dargestellt. Auf Grundlage der Abweichung der Abstände beziehungsweise der Laufstrecken zu den Referenztranspondern $32a_m$ sowie $32a_r$ beziehungsweise der Abstandsdifferenz AD kann eine fehlertolerante Nutzungshöhe NH des jeweiligen Lagerfachs 35a oder 35b definiert sein.

Die fehlertolerante Nutzungshöhe NH kann auf Grundlage der folgenden Formel definiert sein:

$$NH = H - AD$$

wobei

NH = fehlertolerante Nutzungshöhe
H = Fachhöhe
AD = Abstandsdifferenz.

Aufgrund der unterschiedlichen Abstände zwischen der Leseeinheit 30 und dem mittig angeordneten Referenztransponder $32a_m$ einerseits und zwischen der Leseeinheit 30 und einem randseitig angeordneten Referenztransponder $32a_r$ andererseits ergeben sich auch unterschiedlichen Signallaufzeiten. Die Signallaufzeit zwischen Leseeinheit 30 und dem mittig angeordneten Referenztransponder $32a_m$ ist geringer als zwischen der Leseeinheit 30 und dem randseitig angeordneten Referenztransponder $32a_r$. Diese Laufzeitdifferenz ist zurückzuführen auf die Abstandsdifferenz AD. Bei Einhaltung der fehlertoleranten Nutzungshöhe NH können Abweichungen aufgrund der Abstandsdifferenz AD ohne oder weitgehend ohne Einfluss auf die Betriebsgenauigkeit bleiben.

Durch die Leseanordnung 26 kann nun eine Positionsbestimmung der Transponder 28a und 28b innerhalb des Lagerraums 22 vorgenommen werden. Hierzu werden die Signallaufzeiten zwischen der Leseeinheit 30 und den jeweiligen Transpondern 28a und 28b bestimmt und in Verhältnis gesetzt mit den Signallaufzeiten zwischen der Leseeinheit 30 und den Referenztranspondern $32a_m$, $32a_r$, $32b_m$ und $32b_r$, die ihrerseits in den Fachböden 34a und 34b angeordnet sind.

Wird nun durch die Leseeinheit 30 festgestellt, dass die Signallaufzeit $t_{Obj1}$ zwischen Leseeinheit 30 und Warentransponder 28a kleiner ist als die Signallaufzeit $t_{Ref1m}$ zwischen Leseeinheit 30 und Referenztransponder $32a_m$ sowie die Signallaufzeit $t_{Ref1r}$ zwischen Leseeinheit 30 und Referenztransponder $32a_r$, dann kann geschlussfolgert werden, dass sich der Warentransponder 28a oberhalb des Fachbodens 34a und somit im Lagerfach 35a befindet.

Wird ferner festgestellt, dass die Signallaufzeit $t_{Obj2}$ zwischen Leseeinheit 30 und Warentransponder 28b der Ware 24b kleiner ist als die Signallaufzeit $t_{Ref2m}$ zwischen Leseeinheit 30 und Referenztransponder $32b_m$ sowie die Signallaufzeit $t_{Ref2r}$ zwischen Leseeinheit 30 und Referenztransponder $32b_r$, dann kann geschlussfolgert werden, dass sich der Transponder 28b oberhalb des Fachbodens 34b und damit im Lagerfach 35b befindet. Ist nun auch die Signallaufzeit $t_{Obj2}$ größer als die Signallaufzeit $t_{Ref1m}$ und/oder größer als die Signallaufzeit $t_{Ref1r}$, kann geschlussfolgert werden, dass sich der Transponder 28b unterhalb des Fachbodens 34a befindet.

Für eine geeignete Darstellung kann eine Anzeigeeinrichtung 37 vorgesehen sein, wie beispielhaft in Fig. 3 gezeigt. Eine solche Anzeigeeinrichtung 37 kann zur Anzeige von erfassten Waren und/oder Warenpositionen eingerichtet sein. Ebenfalls kann die Anzeigeeinrichtung 37 zur dynamischen Warenpositions- und/oder Warenbestandswiedergabe eingerichtet sein. Die Anzeigeeinrichtung 37 ist in den Fig. 2 und 3 schematisch angedeutet worden.

Ferner kann eine hier nicht weiter dargestellte Auswerteeinheit 38 zur Signalauswertung und/oder Warenbestandsauswertung beziehungsweise zur dynamischen Zugriffsauswertung vorgesehen sein. Eine solche Auswerteeinheit 38 kann in besonders vorteilhafter Weise zur periodischen und/oder wiederkehrenden und/oder dynamischen Warenbestands- und/oder Warenpositionsauswertung eingerichtet sein. Die Auswerteeinheit 38 kann beispielsweise angrenzend an die Leseeinheit 30 angeordnet sein, wie ebenfalls in den Fig. 2 und 3 schematisch angedeutet worden ist. Durch eine solche Auswerteeinheit 38 kann die Funktionalität des Warenspeichers 10 in besonders vorteilhafter Weise erweitert und für den Betreiber eines solchen Warenspeichers 10 eine Aufwandsverringerung für die Überwachung beziehungsweise die Beschickung des Lagerraums 22 des Warenspeichers 10 ermöglichen.

Eine Auswerteeinheit 38 kann rein beispielhaft ein permanentes Inventurabbild beziehungsweise Inventur-Lagerabbild sowie eine dynamische Zugriffskontrolle gewährleisten. Hierdurch ist schlussendlich eine mathematische Auswertung möglich, durch die eine geeignete Aufrechterhaltung von Beständen innerhalb des Lagerraums 22 des Warenspeichers 10 sichergestellt werden kann. Durch die Aufrechterhaltung geeigneter Lagerbestände innerhalb des Lagerraums 22 wird schließlich die Anwenderfreundlichkeit erhöht, da das Risiko nicht vorhandener beziehungsweise vergriffener Waren innerhalb des Lagerraums 22 verringert werden kann. Ein Warenspeicher 10 gemäß der vorliegenden Erfindung eignet sich in besonders vorteilhafter Weise für die Auf- beziehungsweise Entnahme von Textilien, beispielsweise für Berufstextilien und/oder Berufsbekleidung, wie dies in Krankenhäusern erforderlich sein kann.

Es sind ferner auch andere Anwendungsbereiche für einen vorliegend beschriebenen Warenspeicher 10 möglich, die allerdings nicht der beanspruchten Erfindung entsprechen. Hierzu zählen beispielsweise auch sicherheitsrelevante Anwendungen, wie die Auf- und Entnahme von Schlüsseln oder Waffen beziehungsweise auch Medizinprodukte, insbesondere Medikamente. Ebenso, gemäß einem Ausführungsbeispiel, das nicht der beanspruchten Erfindung entspricht, ist die Auf- beziehungsweise Entnahme von Arbeitsmitteln und Werkzeugen durch einen erfindungsgemäßen Warenspeicher realisierbar.

**Patentansprüche**

1. Warenspeicher (10) für mit Transponder (28) versehene und als Textilien ausgebildete Waren (24), mit einem Lagerraum (22) zur Auf- und/oder Entnahme von Waren (24) und mit einer Leseanordnung (26) zur berührungslosen Identifikation von den Transpondern (28), wobei der Lagerraum (22) durch ein Gehäuse (12) und von Wandabschnitten (14, 16, 18, 19) umgeben ist, wobei der Lagerraum (22) eine Mehrzahl von Lagerfächern (35) aufweist, wobei der Lagerraum (22) durch eine Ordnungsstruktur (36) in die Mehrzahl von Lagerfächern unterteilt ist, wobei die Ordnungsstruktur (36) mehrere Fachböden (34) aufweist, wobei der Lagerraum (22) durch eine Schließvorrichtung (20) verschließbar ist, wobei die Leseanordnung (26) zur Positionsbestimmung und/oder -eingrenzung von den Transpondern (28) innerhalb des Lagerraums (22) durch Laufzeitbestimmung eingerichtet ist, wobei die Leseanordnung (26) eine Leseeinheit (30) aufweist, die zur berührungslosen Identifikation von Transpondern (28) in einem maximalen Abstand von bis zu 2,5 m eingerichtet ist, wobei die Leseanordnung (26) eine Mehrzahl von Referenztranspondern (32) aufweist und die Referenztransponder (32) der Leseanordnung (26) innerhalb des Lagerraums (22) angeordnet sind, wobei innerhalb jedes Fachbodens (34) ein Referenztransponder (32) der Mehrzahl von Referenztranspondern (32) mittig angeordnet und mehrere Referenztransponder (32) der Mehrzahl von Referenztranspondern (32) randseitig angeordnet sind, wobei die Leseeinheit (30) in einem Gehäusedach (16) des Warenspeichers (10) angeordnet ist, wobei die Leseanordnung (26) zur Bestimmung von Laufzeitdifferenzen zwischen den Referenztranspondern (32) und den Transpondern (28) eingerichtet ist, wobei zumindest eines der Lagerfächer (35) nur bis zu einer fehlertoleranten Nutzungshöhe befüllbar ist und wobei die Befüllbarkeit bis zu einer fehlertoleranten Nutzungshöhe mittels Barrieren an der Unterseite des Fachbodens (34), der dem zumindest einen der Lagerfächer (35) übergeordnet ist, bewerkstelligt ist.

2. Warenspeicher (10) nach Anspruch 1, **dadurch gekennzeichnet, dass** die Leseanordnung (26) zur Positionsbestimmung und/oder -eingrenzung von Transpondern (28) innerhalb des Lagerraums (22) ausschließlich durch Laufzeitbestimmung eingerichtet ist.

3. Warenspeicher (10) nach einem der vorstehenden Ansprüche, **dadurch gekennzeichnet, dass** die Ordnungsstruktur (36) des Lagerraums (22) werkzeugfrei anpassbar ist.

4. Warenspeicher (10) nach einem der vorstehenden Ansprüche, **dadurch gekennzeichnet, dass** der Lagerraum (22) abgeschirmt ist, insbesondere in einem verschlossenen Zustand elektromagnetisch abgeschirmt ist.

5. Warenspeicher (10) nach Anspruch 1, **dadurch gekennzeichnet, dass** die Position zumindest eines Referenztransponders (32) der Mehrzahl von Referenztranspondern (32) innerhalb des Lagerraums (22) werkzeugfrei anpassbar ist.

6. Warenspeicher (10) nach einem der vorstehenden Ansprüche, **dadurch gekennzeichnet, dass** die Leseanordnung (26) zur Bestimmung der Fachposition einer Ware (24) eingerichtet ist.

7. Warenspeicher (10) nach einem der Ansprüche 1, 5 oder 6, **dadurch gekennzeichnet, dass** mehrere Referenztransponder (32) der Mehrzahl von Referenztranspondern (32) eine Referenzebene definieren.

8. Warenspeicher (10) nach Anspruch 1, **dadurch gekennzeichnet, dass** die Leseanordnung (26) kalibrierbar ist durch Auswahl einer Position zumindest eines Referenztransponders (32) der Mehrzahl von Referenztranspondern (32) und durch Ausführung zumindest einer Referenzmessung für die Signallaufzeit zwischen der Leseeinheit (30) und dem zumindest einen Referenztransponder (32).

9. Verfahren zur Positionsbestimmung von als Textilien ausgebildete Waren in dem Warenspeicher (10) nach Anspruch 1, bei dem wenigstens eine mit einem Transponder (28) versehene und als Textilie ausgebildete Ware (24) in einem Lagerraum (22) eines Warenspeichers (10) angeordnet wird, bei dem eine Leseanordnung (26) den Transponder (28) der Ware berührungslos identifiziert und bei dem durch Laufzeitbestimmung dessen Position im Lagerraum (22) bestimmt und/oder eingegrenzt wird.

**Claims**

1. Article storage (10) for articles (24) provided with transponders (28) and designed as textiles, with a storage space (22) for loading and/or unloading articles (24) and with a reading arrangement (26) for contactless identification of the transponders (28), wherein the storage space (22) is surrounded by a housing (12) and by wall sections (14, 16, 18, 19), wherein the storage space (22) has a plurality of storage compartments (35), wherein the storage space (22) is subdivided into the plurality of storage compartments by an organizing structure (36), wherein the organizing structure (36) has a plurality of shelves (34), wherein the storage space (22) can be closed by a closing device (20), wherein the reading arrangement (26) is set up for determining and/or delimiting the position of the transponders (28) within the storage space (22) by determining the transit time, wherein the reading arrangement (26) has a reading unit (30) which is set up for contactless identification of transponders (28) at a maximum distance of up to 2,5 m, wherein the reading arrangement (26) comprises a plurality of reference transponders (32) and the reference transponders (32) of the reading arrangement (26) are arranged within the storage space (22), wherein within each shelf (34) one reference transponder (32) of the plurality of reference transponders (32) is arranged centrally and a plurality of reference transponders (32) of the plurality of reference transponders (32) are arranged at the edges, wherein the reading unit (30) is arranged in a housing roof (16) of the article storage (10), wherein the reading arrangement (26) is set up to determine transit time differences between the reference transponders (32) and the transponders (28), wherein at least one of the storage compartments (35) can only be filled up to an error-tolerant utilization height and wherein the fillability up to an error-tolerant utilization height is achieved by means of barriers on the underside of the shelf (34), which is arranged above the at least one of the storage compartments (35).

2. Article storage (10) according to claim 1, **characterized in that** the reading arrangement (26) is set up for determining and/or delimiting the position of transponders (28) within the storage space (22) exclusively by determining the transit time.

3. Article storage (10) according to one of the preceding claims, **characterized in that** the organizing structure (36) of the storage space (22) can be adapted without tools.

4. Article storage (10) according to one of the preceding claims, **characterized in that** the storage space (22) is shielded, in particular electromagnetically shielded in a closed state.

5. Article storage (10) according to claim 1, **characterized in that** the position of at least one reference transponder (32) of the plurality of reference transponders (32) within the storage space (22) can be adjusted without tools.

6. Article storage (10) according to one of the preceding claims, **characterized in that** the reading arrangement (26) is set up to determine the compartment position of an article (24).

7. Article storage (10) according to any one of claims 1, 5 or 6, **characterized in that** a plurality of reference transponders (32) of the plurality of reference transponders (32) define a reference plane.

8. Article storage (10) according to claim 1, **characterized in that** the reading arrangement (26) can be calibrated by selecting a position of at least one reference transponder (32) of the plurality of reference transponders (32) and by carrying out at least one reference measurement for the signal transit time between the reading unit (30) and the reference transponder (32).

9. Method for determining the position of articles designed as textiles in the article storage (10) according to claim 1, in which at least one article (24) provided with a transponder (28) and designed as a textile is arranged in a storage space (22) of an articles store (10), in which a reading arrangement (26) contactless identifies the transponder (28) of the article and in which its position in the storage space (22) is determined and/or delimited by determining the transit time.

**Revendications**

1. Moyen d'emmagasinage d'articles (10) pour des articles (24) conçus en tant que textiles et pourvus d'un transpondeur (28), comportant un espace de stockage (22) permettant de recevoir et/ou de retirer des articles (24) et comportant un agencement de lecture (26) permettant l'identification sans contact des transpondeurs (28), dans lequel l'espace de stockage (22) est entouré par un boîtier (12) et des sections de paroi (14, 16, 18, 19), dans lequel l'espace de stockage (22) présente une pluralité de compartiments de stockage (35), dans lequel l'espace de stockage (22) est divisé en la pluralité de compartiments de stockage par une structure de rangement (36), dans lequel la structure de rangement (36) présente plusieurs fonds de compartiment (34), dans lequel l'espace de stockage (22) peut être fermé par un dispositif de fermeture (20), dans lequel l'agencement de lecture (26) est configuré pour la détermination et/ou la délimitation de la position des transpondeurs (28) à l'intérieur de l'espace de stockage (22) par la détermination de temps de parcours, dans lequel l'agencement de lecture (26) présente une unité de lecture (30) qui est configurée pour l'identification sans contact de transpondeurs (28) à une distance maximale allant jusqu'à 2,5 m, dans lequel l'agencement de lecture (26) présente une pluralité de transpondeurs de référence (32) et les transpondeurs de référence (32) de l'agencement de lecture (26) sont disposés à l'intérieur de l'espace de stockage (22), dans lequel un transpondeur de référence (32) de la pluralité de transpondeurs de référence (32) est disposé au centre à l'intérieur de chaque fond de compartiment (34) et plusieurs transpondeurs de référence (32) de la pluralité de transpondeurs de référence (32) sont disposés côté bord, dans lequel l'unité de lecture (30) est disposée dans une partie supérieure de boîtier (16) du moyen d'emmagasinage d'articles (10), dans lequel l'agencement de lecture (26) est configuré pour la détermination de différences de temps de parcours entre les transpondeurs de référence (32) et les transpondeurs (28), dans lequel au moins l'un des compartiments de stockage (35) ne peut être rempli que jusqu'à une hauteur d'utilisation tolérant les défaillances et dans lequel la capacité de remplissage est réalisée jusqu'à une hauteur d'utilisation tolérant les défaillances au moyen de barrières sur la face inférieure du fond de compartiment (34) qui est disposé au-dessus de l'au moins un compartiment de stockage parmi les compartiments de stockage (35).

2. Moyen d'emmagasinage d'articles (10) selon la revendication 1, **caractérisé en ce que** l'agencement de lecture (26) est configuré pour la détermination et/ou la limitation de la position de transpondeurs (28) à l'intérieur de l'espace de stockage (22) exclusivement par la détermination de temps de parcours.

3. Moyen d'emmagasinage d'articles (10) selon l'une des revendications précédentes, **caractérisé en ce que** la structure de rangement (36) de l'espace de stockage (22) peut être ajustée sans outil.

4. Moyen d'emmagasinage d'articles (10) selon l'une des revendications précédentes, **caractérisé en ce que** l'espace de stockage (22) est protégé, en particulier est protégé de manière électromagnétique dans un état fermé.

5. Moyen d'emmagasinage d'articles (10) selon la revendication 1, **caractérisé en ce que** la position d'au moins un transpondeur de référence (32) de la pluralité de transpondeurs de référence (32) à l'intérieur de l'espace de stockage (22) peut être ajustée sans outil.

6. Moyen d'emmagasinage d'articles (10) selon l'une des revendications précédentes, **caractérisé en ce que** l'agencement de lecture (26) est configuré pour la détermination de la position de compartiment d'un article (24).

7. Moyen d'emmagasinage d'articles (10) selon l'une des revendications 1, 5 ou 6, **caractérisé en ce que** plusieurs transpondeurs de référence (32) de la pluralité de transpondeurs de référence (32) définissent un plan de référence.

8. Moyen d'emmagasinage d'articles (10) selon la revendication 1, **caractérisé en ce que** l'agencement de lecture (26) peut être calibré en choisissant une position d'au moins un transpondeur de référence (32) de la pluralité de transpondeurs de référence (32) et en réalisant au moins une mesure de référence pour le temps de parcours de signal entre l'unité de lecture (30) et l'au moins un transpondeur de référence (32).

9. Procédé permettant la détermination de la position d'articles conçus en tant que textiles dans le moyen d'emmagasinage d'articles (10) selon la revendication 1, dans lequel au moins un article (24) conçu en tant que textile et pourvu d'un transpondeur (28) est disposé dans un espace de stockage (22) d'un moyen d'emmagasinage d'articles (10), dans lequel un agencement de lecture (26) identifie sans contact le transpondeur (28) de l'article et dans lequel la position dudit article dans l'espace de stockage (22) est déterminée et/ou limitée par la détermination de temps de parcours.

# Fig. 1

# Fig. 2

# Fig. 3

# Fig. 4a

# Fig. 4b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2009085746 A1
- AU 2017220064 A1